(19) Europäisches Patentamt
European Patent Office
Office européen des brevets

(11) Veröffentlichungsnummer: **0 133 680**
**B1**

(12) # EUROPÄISCHE PATENTSCHRIFT

(45) Veröffentlichungstag der Patentschrift: **27.04.88**

(51) Int. Cl.⁴: **C 08 L 97/02**, B 27 N 3/00, C 08 G 18/18

(21) Anmeldenummer: **84108992.3**

(22) Anmeldetag: **30.07.84**

(54) **Verfahren zur Herstellung von Presswerkstoffen mit Polyisocyanat-Bindemitteln unter Mitverwendung von latenten, wärmeaktivierbaren Katalysatoren.**

(30) Priorität: **09.08.83 DE 3328662**

(43) Veröffentlichungstag der Anmeldung: **06.03.85 Patentblatt 85/10**

(45) Bekanntmachung des Hinweises auf die Patenterteilung: **27.04.88 Patentblatt 88/17**

(84) Benannte Vertragsstaaten: **AT BE CH DE FR GB LI SE**

(56) Entgegenhaltungen:
**DE-A-3 143 706**
**DE-B-2 711 958**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Kerimis, Dimitrios, Dr., Pulheimer Strasse 15, D-5000 Koeln 71 (DE)**
Erfinder: **Müller, Peter, Dr., Im Kerberich 6, D-5068 Odenthal (DE)**
Erfinder: **Kapps, Manfred, Dr., Hoppersheider Weg 55, D-5060 Bergisch- Gladbach 2 (DE)**

**EP 0 133 680 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Es wird ein Verfahren zur Herstellung von Preßwerkstoffen, vorzugsweise Spanplatten, durch Heißverpressen von mit Polyisocyanaten als Bindemittel vermischten und/oder imprägnierten lignosecellulosehaltigen Rohstoffen unter Mitverwendung von neuartigen, latenten, durch Wärme aktivierbaren Katalysatoren auf der Basis von Ammoniumsalzen (einschließlich Tetraalkylammoniumsalzen), wie sie durch Umsetzung von primären, sekundären und/oder tertiären Aminen mit alkylierend wirkenden Alkylestern von Säuren des Phosphors entstehen, beansprucht.

Preßwerkstoffe, wie z. B. Spanplatten, Verbundplatten oder andere Formkörper werden gewöhnlich so hergestellt, daß man das anorganische oder organische Rohmaterial, z. B. eine Masse aus Holzschnitzeln, Holzfasern und/oder anderen lignosecellulosehaltigem Material, mit Polyisocyanaten und Wasser, gegebenenfalls Polyolen oder anderen Bindemitteln wie Harnstoff/Formaldehyd- oder Phenol/Formaldehyd-Harzen, heiß verpreßt. Die Verwendung von Polyisocyanaten als Bindemittel verbessert die Stabilität und das Feuchteverhalten der Produkte und erhöht deren mechanische Eigenschaften. Darüber hinaus besitzen Polyisocyanate als Bindemittel, wie z. B. in der DE-OS 2 109 686 offenbart, weitreichende verfahrenstechnische Vorteile.

Prinzipiell können bei den Verfahren des Standes der Technik (siehe z. B. DE-AS 2 711 958) auch Katalysatoren der aus der Polyurethanchemie an sich bekannten Art, z. B. solche, wie sie in der DE-OS 2 854 384 auf den Seiten 26 bis 29 und 31 bis 33 genannt sind, mitverwendet werden, um Preßzeiten zu verkürzen. Dies ist bei sogenannten Einetagenpressen von besonderer Wichtigkeit. Hierbei kommt es jedoch meist bereits beim Vermischen der Komponenten und der Lagerung der mit Isocyanaten beleimten Späne vor der Verpressung zu unerwüschter Schaumbildung und vorzeitiger Abbindung infolge der sofort einsetzenden Katalysatorwirkung auf die reaktiven NCO-Gruppen. Deswegen muß man meist auf die Mitverwendung von Katalysatoren verzichten und längere Preßzeiten in Kauf nehmen.

Aufgabe der vorliegenden Erfindung ist es daher, ein latentes Katalysatorsystem zur Verfügung zu stellen, das Reaktionen von Polyisocyanaten wie die Cyclotrimerisierung, die Urethanreaktion und die NCO/Wasser-Reaktion in Abhängigkeit von der Temperatur bei erhöhten Temperaturen aktivieren kann, aber bei Raumtemperatur sich noch nicht stark katalytisch wirkend verhält. So kann dieses Katalysatorsystem bereits dem verwendeten Polyisocyanat oder der zur Herstellung von Preßkörpern benutzten Formulierung aus Polyisocyanat, Wasser, lignocellulosehaltigen Materialien wie Fasern, Spänen oder strohartigen Fasern und evtl. anderen mitzuverwendenden Polyhydroxylverbindungen hinzugemischt werden, ohne daß es bei Raumtemperatur und beim Vermischen und Lagern zu unerwünschten Reaktionen kommt. Die Preßzeiten können andererseits infolge der bei der hohen Temperatur bewirkten Katalyse durch schnelleres Abbinden bei der Pressung erheblich gesenkt werden. Überraschenderweise wurde nun gefunden, daß die nachstehend näher beschriebenen Katalysatoren zur Lösung der beschriebenen Aufgabe sehr gut geeignet sind, da sie bei Raumtemperatur latente Katalysatoren in der Polyisocyanat-Formulierung darstellen, aber bei den Preßtemperaturen die Isocyanatreaktionen in Abhängigkeit von der Temperatur katalysieren und somit die oben gestellten Bedingungen erfüllen.

Gegenstand der Erfindung ist ein Verfahren zur Herstellung von Preßwerkstoffen, insbesondere Holzspanplatten, durch Heißverpressen von mit Polyisocyanaten als Bindemittel vermischten und/oder imprägnierten lignocellulosehaltigen Werkstoffen unter Verwendung von Katalysatoren, dadurch gekennzeichnet, daß als Katalysatoren tertiäre oder quartäre Ammoniumphosphonate oder quartäre Ammoniumphosphate eingesetzt werden.

Bei den erfindungsgemäß einzusetzenden Ammoniumsalzen handelt es sich um solche, die durch Umsetzung von Alkylestern der phosphorigen Säure oder der Phosphonsäure mit sekundären oder tertiären Aminen bzw. von Alkylestern der Phosphorsäure mit tertiären Aminen hergestellt wurden.

Beispiele geeigneter sekundärer und tertiärer amine sind Diethylamin, Triethylamin, Tri-(n-propyl)-amin, Di-(n-butyl)-amin, W-Methyl-N,N-di(n-butyl)-amin, Di-(iso-octyl)-amin, Piperidin, N-Methyl-piperidin, Morpholin, N-Methyl-morpholin, permethyliertes Diethylentriamin, Diethylentriamin, Triethylendiamin, Diethanolamin, Dipropanolamin, Triethanolamin, N,N-Dimethyl-benzylamin, Ethylendiamin, Hexamethylendiamin, nichtcyclische Amidine wie z. B. N,N'-Dimethylacetamidin, N,N'-Dicyclohexyl-N-methyl-acetamidin, monocyclische Amidine wie z. B. 2,3-Dimethyl-3,4,5,6-tetrahydropyrimidin oder bicyclische Amidine wie z. B. 1,5-Diazabicyclo(3.4.0)non-5-en oder 1,8-Diazabicyclo(5.4.0)undec-7-en.

Neben diesen beispielhaft genannten Aminen können zur Herstellung der erfindungsgemäß zu verwendenden Ammoniumsalze auch heterocyclische Amine, deren Aminstickstoffatom Teil eines heteroaromatischen Rings ist, wie z. B. Pyridin oder 1-Methyl-pyridin oder aromatische Amine wie z. B. N,N-nimethylanilin eingesetzt werden. Derartige Amine Bind im Vergleich zu den erstgenannten aminen weniger bevorzugt.

Die erfindungsgemäß zu verwendenden Ammoniumsalze werden durch Umsetzung der beispielhaft genannten tertiären Amine mit den Alkylestern der Phosphorsäure, sowie durch Umsetzung der genannten sekundären oder tertiären Amine mit den Alkylestern der phosphorigen Säure und vor allem von aromatischen oder aliphatischen Phosphonsäuren erhalten. Vorzugsweise werden die entsprechenden Alkylester mit 1 bis 4 Kohlenstoffatomen in den einzelnen Alkylresten eingesetzt. Besonders bevorzugt sind Phosphonsäureester der Formel

$$R-\overset{O}{\overset{\|}{P}}(OR')_2$$

in welcher

R für einen, gegebenenfalls inerte Substituenten aufweisenden aromatischen Kohlenwasserstoffrest, insbesondere Phenylrest oder einen aliphatischen oder cycloaliphatischen Kohlenwasserstoffrest, insbesondere einen Alkylrest mit 1 bis 8 Kohlenstoffatomen steht, und

R' für gleiche oder verschiedene aliphatische Kohlenwasserstoffreste, insbesondere Alkylreste mit 1 bis 8, besonders bevorzugt 1-4 Kohlenstoffatomen, stehen.

Typische Beispiele geeigneter Phosphoresterkomponenten sind Triethylphosphit, Trioctylphosphit, Diethylphosphit. Triethylphosphat, Dimethyl-benzylphosphat, Trimethylphosphit, Trimethylphosphat, Benzolphosphonsäure-dimethylester, p-Toluolphosphonsäurediethylester, Methanphosphonsäuredimethylester, n-Butanphosphonsäurediethylester, Ethanphosphonsäurediethylester oder Ethanphosphonsäuredimethylester.

Die erfindungswesentlichen Katalysatoren bzw. ihre Herstellung sind im Prinzip bekannt (Houben-Weyl, Band XII/2, Seiten 262 ff). Bei der Herstellung der Katalysatoren kann beispielsweise so vorgegangen werden daß die beispielhaft genannten Einzelkomponenten: Amine und Alkylester so miteinander umgesetzt werden, daß im Endprodukt praktisch alle Aminstickstoffatome durch die Phosphorester alkyliert worden sind. Dies bedeutet, daß die Reaktion in einem Molverhältnis von Aminogruppen zu Alkylester von etwa 1 : 1 abläuft, wobei, im Falle der Verwendung von Amidinen das eine Doppelbindung aufweisende Stickstoffatom nicht in diese Berechnung eingeht. Zur Bildung der erfindungsgemäß einzusetzenden Ammoniumsalze kann ein beliebig hoher Überschuß des Alkylesters eingesetzt werden, die vorzugsweise nach Beendigung der Reaktion, beispielsweise durch Destillation, entfernt wird. Eine überschüssige Menge der Alkylester kann gegebenenfalls auch (als Lösungsmittel) in den erfindungsgemäß zu verwendenden Ammoniumsalzen verbleiben. Die Umsetzung der Einzelkomponenten erfolgt vorzugsweise in Substanz innerhalb des Temperaturbereichs von 50-200°C, vorzugsweise 80-180°C während eines Zeitraums von ca. 0,5 bis 15 Stunden. Im allgemeinen erfolgt die Umsetzung dergestalt, daß man die Reaktionspartner am Rückfluß kocht. Oft ist es vorteilhaft, die Umsetzung unter Inertgasatmosphäre und/oder unter Druck durchzuführen. Die Reaktionsdauer und -temperatur richtet sich selbstverständlich in erster Linie nach der Reaktivität der jeweils zum Einsatz gelangenden Einzelkomponenten. Bei Verwendung von einwertigen, leichtflüchtigen Aminen können selbstverständlich auch diese im Überschuß eingesetzt und der verbleibende Überschuß anschließend destillativ vom Reaktionsprodukt abgetrennt werden. Werden die überschüssigen Amine nicht vom Ammoniumsalz abgetrennt, so wirken sie als zusätzliche Aminkatalysatoren, was in einer Variante des erfindungsgemäßen Verfahrens gleichfalls möglich und beansprucht wird.

Eine Variante dieser Ausführungsform der Herstellung der erfindungsgemäß zu verwendenden Katalystoren besteht darin, das man die Katalysatoren in situ während der Herstellung des zum Polyurethan ausreagierenden Reaktionsgemisches herstellt, in dem man z. B. das Amin in der wäßrigen Phase und/oder gegebenenfalls Polyolphase und den Alkylester in der Polyisocyanatkomponente löst, so daß bei der Vereinigung der beiden ausreagierenden Komponenten zur Bildung der wäßrigen Polyisocyanat-Bindemitteldispersion der erfindungsgemäß zu verwendende Katalysator durch eine augenblicklich ablaufende Neutralisationsreaktion entsteht. Bei der Herstellung der erfindungsgemäß zu verwendenden Katalysatoren durch eine Neutralisationsreaktion gelten die obengemachten Ausführungen bezüglich der Mengenverhältnisse sinngemäß; auch hier kann eine gegebenenfalls im Überschuß zum Einsatz gebrachte, leichterflüchtige Komponente im Anschluß an die Reaktion destillativ vom Reaktionsprodukt abgetrennt werden. Bei der Herstellung der Katalysatoren in situ werden vorzugsweise äquivalente Mengen der Reaktions-Partner eingesetzt. Die Neutralisation kann selbstverständlich bei Raumtemperatur erfolgen.

Bei den erfindungsgemäß zu verwendenden Katalysatoren handelt es sich im allgemeinen um farblose bis gelbe, geruchslose Flüssigkeiten oder niedrig schmelzende kristalline Verbindungen, welche bei Temperaturen von unterhalb 30°C, vorzugsweise unterhalb 20°C ohne nennenswerte katalytische Aktivität bezüglich der Isocyanatadditionsreaktion sind. Erst bei Temperaturen oberhalb 60°C, insbesondere innerhalb des Temperaturbereichs von 90-150°C, vorzugsweise 90-130°C, kommt es zu einer ausgeprägten katalytischen Wirkung der erfindungsgemäß zu verwendenden Katalysatoren. Hierdurch wird erreicht, daß einerseits die Lagerstabilität von erfindungsgemäß zu verwendenden, Katalysatoren enthaltenden Reaktionsgemischen aus Polyisocyanaten und Polyolen bei den genannten niedrigen Temperaturen nur wenig unter der Lagerstabilität entsprechender, unkatalysierter Reaktionsgemische liegt, während andererseits bei höheren Temperaturen innerhalb der genannten Bereiche die erwünschte, starke Beschleunigung der Isocyanat-Additonsreaktion erfolgt.

Besonders bevorzugte Beispiele der erfindungsgemäß zu verwendenden Katalysatoren sind:

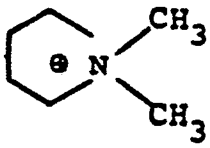 $\cdot X^{\ominus}$ ; $\overset{\oplus}{N}(C_2H_5)_4 \cdot Y^{\ominus}$ ;

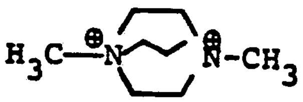 $\cdot 2X^{\ominus}$ ; 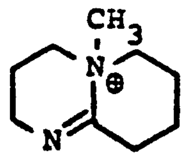 $\cdot X^{\ominus}$ ;

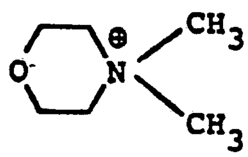 $\cdot X^{\ominus}$ ; 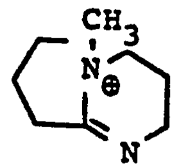 $\cdot X^{\ominus}$ ;

$(C_4H_9)_3\overset{\oplus}{N}-CH_3 \cdot X^{\ominus}$ ; $[HO-(CH_2)_2-]_3\overset{\oplus}{N}-CH_3 \cdot X^{\ominus}$ ;

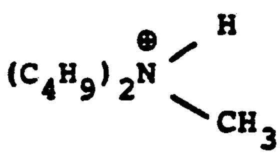 $\cdot X^{\ominus}$ ; $(C_2H_5)_3\overset{\oplus}{N}H \cdot Z^{\ominus}$ ;

$(C_2H_5)_3\overset{CH_3}{N^{\oplus}} \cdot X^{\ominus}$

wobei

$$X^{\ominus} = {}^{\ominus}O-\underset{CH_3}{\overset{O}{P}}-OCH_3 \quad ; \quad Y^{\ominus} = {}^{\ominus}O-\overset{O}{P}(OC_2H_5)_2$$

und

$$Z^{\ominus} = {}^{\ominus}O-\overset{O}{P}(OC_4H_9)_2 \quad \textbf{bedeutet.}$$

bedeutet

$X^{\ominus}$, $Y^{\ominus}$ und $Z^{\ominus}$ können auch gegeneinander ausgetauscht sein. Die Verbindungen können z. B. aus den zugrundeliegenden (tertiären) Aminen und Methylphosphonsäuredimethylester, Triethylphosphat oder Dibutylphosphat hergestellt werden.

Die erfindungsgemäßen Katalysatoren kommen gegebenenfalls gelöst in mono- oder polyfunktionellen längerkettigen oder kurzkettigen Hydroxylverbindungen zum Einsatz, können aber auch in überschüssigen Ausgangskomponenten gelöst sein. Die erfindungsgemäßen Katalysatoren können selbstverständlich auch in

modifizierten Polyisocyanat-Bindemitteln gelöst sein, so z. B. in wäßrigen Polyisocyanat-Emulsionen, wie sie unter Zusatz von Emulgatoren wie z. B. Polyethylenglykolen, Leim, Polyvinylpyrrolidon, Polyacrylamiden, welche gegebenenfalls Polyethylendispersionen und Holzschutzmittel enthalten, zu den Polyisocyanaten entstehen oder in solchen modifizierten Polyisocyanaten, welche durch Modifizierung mit monofunktionellen Polyethylenoxidderivaten oder durch Zusatz von Phosphor- bzw. Sulfonsäuren hydrophiliert sind.

Als Isocyanatkomponente kommen bei der Durchführung des erfindungsgemäßen Verfahrens aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise solche der Formel

$Q(NCO)_n$

in der

n 2 bis 4, vorzugsweise 2, und

Q einen aliphatischen Kohlenwasserstoffrest mit 2 bis 18, vorzugsweise 6 bis 10 C-atomen, einen cycloaliphatischen Kohlenwasserstoffrest mit 4 bis 23, vorzugsweise 5 bis 13 C-Atomen, einen aromatischen Kohlenwasserstoffrest mit 6 bis 23, vorzugsweise 6 bis 13 C-Atomen, oder einen araliphatischen Kohlenwasserstoffrest mit 8 bis 15, vorzugsweise 8 bis 13 C-Atomen,

bedeuten, z. B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diiso-cyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z. B. in den GB-PS 874 430 und 848 671 beschrieben werden, m- und p-Isocyanatophenylsulfonylisocyanate, perchlorierte Arylpolyisocyanate, Carbodiimidgruppen aufweisende Polyisocyanate, Norbornan-Diisocyanat, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Polyisocyanate, Umsetzungsprodukte der obengenannten Isocyanate mit Acetalen und polymere Fettsäureester enthaltende Polyisocyanate.

Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), sowie besonders Polyphenyl-polymethylen-polyisocyanate, wie sie durch Anilin-Formaldehyd-Kondensation und anschließende Phosgenierung hergestellt werden ("rohes MDI") und gegebenenfalls durch weitere Modifizierungsreaktionen Carbodiimidgruppen, Urethangruppen (z. B. durch Umsetzung mit unterschüssigen Mengen an niedermolekularen Di- und/oder Polyolen), Allophanatgruppen, Isocyanuratgruppen, Harnstoffgruppen, Biuretgruppen oder andere, der Isocyanatchemie entsprechenden Gruppen, aufweisende Polyisocyanate ("modifizierte Polyisocyanate"), insbesondere solche modifizierten Polyisocyanate, die sich vom 2,4-und/oder 2,6-Toluylendiisocyanat bzw. besonders vom 4,4'- und/oder 2,4'- und/oder 2,2'-Diphenylmethan-diisocyanat ableiten. Diese gegebenenfalls modifizierten, zwei oder mehrkernigen Polyisocyanate auf Polyphenyl-polymethylen-polyisocyanat-Basis können auch in Mischung mit den Diphenylmethandiisocyanaten verwendet werden. Es sind auch solche Isocyanate geeignet, wie sie in der DE-OS 2 711 958 beansprucht werden oder auch solche di- und mehrkernige Polyisocyanate-Rohgemische, welche durch Abdestillieren aus den Rohphosgenierungsprodukten der Formaldehyd/Anilin-Kondensationsprodukt-Amingemische erhalten werden, bzw. solche Roh-MDI-Mischungen, wie sie durch teilweises Abdestillieren der Diphenylmethandiisocyanat-Anteile entstehen.

Für die Durchführung des erfindungsgemäßen Verfahrens können auch endständige Isocyanatgruppen aufweisende Prepolymere mit einem mittleren Molekulargewicht von ca. 300 bis 2000 eingesetzt werden, wie sie durch Umsetzung von höhermolekularen und/oder niedermolekularen Polyolen mit einem Überschuß an Polyisocyanat in an sich bekannter Weise erhalten werden.

In diesem Zusammenhang geeignete höhermolekulare Polyole sind insbesondere zwei bis acht Hydroxylgruppen aufweisende Verbindungen, speziell solche der Molmassen 400 bis 10 000, vorzugsweise 600 bis 5000, z. B. mindestens zwei, in der Regel zwei bis acht, vorzugsweise aber zwei bis vier, Hydroxylgruppen aufweisende Polyester, Polyether, Polythioether, Polyacetale, Polycarbonate und Polyesteramide, wie sie beispielsweise für die Herstellung von homogenen und von zellförmigen Polyurethanen an sich bekannt sind:

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen aliphatischen, cycloaliphatischen, aromatischen und/oder heterocyclischen Carbonsäuren, ihren Estern oder Anhydriden.

Als mehrwertige Alkohole kommen z. B. Ethylenglykol, Propandiol-(1,2) und -(1,3), Butandiol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit,

Mannit und Sorbit, Formit, Methylglykosid, ferner Di-, Tri-, Tetra- und höhere Polyethylenglykole, Di-, Tri-, Tetra- und höhere Polypropylenglykole sowie Di-, Tri-, Tetra- und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Tetrahydrofuran oder Epoxiden wie Ethylenoxid, Propylenoxid, Butylenoxid, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid oder Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in den DE-AS 1 176 358 und 1 064 938 beschrieben werden, sowie auf Formit oder Formose gestartete Polyether (DE-OS 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioethern seien insbesondere die Kondensationsprodukte von Thiodiglykol mit sich selbst und/ oder mit anderen Glykolen, Dicarbonsäuren, Formaldehyd, Aminocarbonsäuren oder Aminoalkoholen angeführt.

Als Polyacetale kommen z. B. die aus Diolen und Formaldehyd oder durch Polymerisation cyclischer Acetale herstellbaren Verbindungen in Frage.

Als Hydroxylgruppen aufweisende Polycarbonate kommen solche der an sich bekannten Art in Betracht.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

Erfindungsgemäß können neben den erfindungsgemäß einzusetzenden Ammonium-Verbindungen auch die aus der Polyurethan-Chemie an sich bekannten Katalysatoren, z. B. solche, wie sie in der DE-OS 2 854 384 auf den Seiten 26 bis 29 und 31 bis 33 genannt werden, mitverwendet werden, und zwar in der Regel in einer Menge von 5 bis 100 Gew.-%, bezogen auf die erfindungsgemäß einzusetzenden Ammonium-Verbindungen.

Als mitzuverwendende Katalysatoren kommen z. B. in Frage: tertiäre Amine, wie Triethylamin, Tributylamin, N-Methylmorpholin, N-Ethyl-morpholin, N-Cocomorpholin, N,N,N',N'-Tetramethyl-ethylendiamin, 1,4-Diaza-bicyclo-(2,2,2)-octan, N-Methyl-N'-dimethylaminoethyl-piperazin, N,N-Dimethylbenzylamin, Bis-(N,N-diethylaminoethyl)adipat, N,N-Diethylbenzylamin, Pentamethyldiethylentriamin, N,N-Dimethylcyclohexylamin, N,N,N',N'-Tetra-methyl-1,3-butandiamin, N,N-Dimethyl-β-phenylethylamin, 1,2-Dimethylimidazol, 2-Methylimidazol. Als mitzuverwendende Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z. B. Triethanolamin, Triisopropanolamin, N-Methyldiethanolamin, N-Ethyl-diethanolamin, N,N-Dimethylethanolamin, sowie deren Umsetzungsprodukte mit Alkylenoxiden, wie Propylenoxid und/oder Ethylenoxid.

Als mitzuverwendende Katalysatoren kommen ferner Silaamine mit Kohlenstoff-Silizium-Bindungen, wie sie z. B. in der DE-PS 1 229 290 (entsprechend der US-PS 3 620 984) beschrieben sind, in Frage, z. B. 2,2,4-Trimethyl-2-sila-morpholin und 1,3-Diethylaminomethyl-tetramethyldi-siloxan.

Als mitzuverwendende Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden. Auch organische Metallverbindungen, insbesondere organische Zinnverbindungen, können als Katalysatoren verwendet werden. Als organische Zinnverbindungen kommen vorzugsweise Zinn-(II)-salze von Carbonsäuren wie Zinn-(II)-acetat, Zinn-(II)-octoat, Zinn-(II)-ethylhexoat und Zinn-(II)-laurat und die Zinn-(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle Katalysatoren als Gemische eingesetzt werden.

Weitere Vertreter von erfindungsgemäß mitzuverwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die erfindungsgemäßen Ammonium-Verbindungen werden, wie schon erwähnt, mit Polyisocyanat-Bindemitteln für lignocellulosehaltige Rohstoffe eingesetzt. In diesem Zusammenhang haben sich auch Kombinationen mit technischen, gegebenenfalls modifizierten Polyphenyl-polymethylen-polyisocyanat-Gemischen, beispielsweise Polyisocyanatkomponenten nach DE-AS 2 711 958, bewährt, welche das Phosgenierungsprodukt der nicht destillierten Bodenfraktion ist, wie sie bei der Entfernung von 25 bis 90 Gew.-%, vorzugsweise 30 bis 85 Gew.-% an 2,2'-, 2,4'- und/oder 4,4'-Diaminodi-phenylmethan aus einem Anilin/Formaldehyd-Kondensat entsteht, oder aber jene nicht-destillierte Bodenfraktion ist, wie sie bei der

Entfernung von 25 bis 90 Gew.-%, vorzugsweise 55 bis 85 Gew.-% an 2,2'-, 2,4'- und/oder 4,4'-Diisocyanatodiphenylmethan aus dem rohen Phosgenierungsprodukt eines Anilin/Formaldehyd-Kondensates erhalten wurde, wobei die Isocyanatkomponente 35 bis 70 Gew.-%, vorzugsweise 45 bis 60 Gew.-%, an Diisocyanatodiphenylmethanen enthält, wobei der Gehalt an 2,4'-Diisocyanatodiphenylmethan zwischen 1 und 8 Gew.-%, vorzugsweise zwischen 2 und 5 Gew.-%, und der Gehalt an 2,2'-Diisocyanatodiphenylmethan zwischen 0 und 2 Gew.-% beträgt, und wobei die Isocyanatkomponente eine Viskosität bei 25°C von 50 bis 600 mPa.s, vorzugsweise 100 bis 300 mPa.s, und einen NCO-Gehalt zwischen 28 und 32 Gew.-% aufweist.

Wie aus dem oben Gesagten hervorgeht, werden darartige Bodenfraktionen beispielsweise bei der Entfernung von 45 bis 90 Gew.-%, vorzugsweise 55 bis 85 Gew.-%, an Diisocyanato-diphenylmethanen aus einem rohen Diphenylmethandiisocyanat (Roh-MDI) erhalten, welches mehr als 85 Gew.-%, vorzugsweise mehr als 90 Gew.-%, an 4,4'-Diisocyanatodiphenylmethan enthält. Ein solches rohes Diphenylmethandiisocyanat ist beispielsweise nach dem Verfahren der DE-OS 2 356 828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-%, an 2,4'-Isomeren enthält, 25 bis 80 Gew.-%, vorzugsweise 30 bis 60 Gew.-%, an 2,4-Diisocyanatodiphenylmethan und gegebenenfalls 4,4'- bzw. 2,2'-Diisocyanatodiphenylmethan abzudestillieren. In jedem Falle kann dabei die Destillation so geführt werden, daß der Rückstand die oben angegebene Zusammensetzung aufweist.

Selbstverständlich ist es jedoch auch möglich (und in vielen Fällen in der Praxis auch einfacher), die gewünschte Isomeren- und Oligomerenzusammensetzung des Polyisocyanatgemisches durch Verschneiden verschiedener Bodenfraktionen zu erhalten.

Außer den bevorzugten unmodifizierten Polyisocyanaten können auch selbsttrennend modifizierte Polyisocyanate eingesetzt werden. Derartige, in Richtung auf selbsttrennende Wirkung modifizierte Polyisocyanate werden z. B. in der DE-OS 3 109 317 (US-PS 4 258 169), der DE-OS 2 932 175 (US-PS 4 257 995) und der US-PS 4 257 996 beschrieben, wo man Polyisocyanate mit Phosphorverbindungen modifiziert. Eine Modifizierung von Polyisocyanaten mit 0,1 bis 30 Gew.-% an Phos-phorsäure-$C_1$-$C_7$-Dialkylestern, vorzugsweise Phosphorsäure-di-n-butylester, wird in der Deutschen Patentanmeldung P 31 08 538 beschrieben. Weitere Polyisocyanat-Bindemittelmischungen werden in der EP-A 7532 und EP 13112 beschrieben.

Geeignete lignocellulosehaltige Rohstoffe, die mit der erfindungsgemäßen Polyisocyanat-Aktivator-Formulierung gebunden werden können, sind beispielsweise Holz, Rinde, Kork, Bagasse, Stroh, Flachs, Bambus, Alfagras, Reisschalen, Sisal- und Kokosfasern. Das Material kann dabei in Form von Granulaten, Spänen, Fasern oder Mehl vorliegen und einen Wassergehalt von z. B. 0 bis 35 Gew.-%, vorzugsweise von 5 bis 25 Gew.-%, aufweisen. Es wird mit dem erfindungsgemäß zu verwendenden Bindemittel in einer Menge von 1 bis 100, vorzugsweise 2 bis 12 Gew.-%, versetzt und - im allgemeinen unter Einwirkung von Druck und Hitze - zu Platten oder Formkörpern verpreßt.

Selbstverständlich können erfindungsgemäß jedoch auch aus anderen organischen (z. B. Kunststoffabfälle aller Art) und/oder anorganischen Rohstoffen (z. B. Blähglimmer oder Silikatkugeln) Preßkörper hergestellt werden.

Bei der erfindungsgemäßen Verwendung wird das zu verpressende Material mit dem Bindemittel vermischt, und zwar zweckmäßig durch Besprühen mit dem erfindungsgemäßen Bindemittel, um so eine möglichst homogene Verteilung zu erreichen.

In der Praxis können Verzögerungsperioden zwischen den einzelnen Verfahrensstufen (Herstellung der Formulierung; Besprühen des zu verwendenden Materials) auftreten, sowie auch Verzögerungen in Folge von Arbeitsfehlern oder in Folge einer Neueinstellung der Verfahrensbedingungen. In wünschenswerter Weise verläuft jedoch die Beschleunigung der Isocyanatreaktionen durch die erfindungsgemäßen Katalysatoren bei Raumtemperatur genügend langsam, so daß eine Verzögerung von mindestens 2 Stunden bis zu mehreren Stunden zwischen Herstellung der Isocyanat-Aktivator-Formulierung und dem Heißpressen in Kauf genommen werden kann. Die Reaktionsgeschwindigkeit kann noch verlangsamt werden, indem die Reaktivität der Polyisocyanate verändert wird. So kann man beispielsweise durch einen erhöhten Anteil an 2,4'- und/oder 2,2'-Diphenylmethandiisocyanat (in Relation zum 4,4'-Isomeren) die Reaktionsgeschwindigkeit deutlich herabsetzen.

In analoger Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchen-Mittellagen, sogenannte Tischlerplatten, können erfindungsgemäß hergestellt werden, indem man die Furniere wie oben beschrieben mit der Isocyanat-Aktivator-Formulierung behandelt und anschließend mit den Mittellagen - in der Regel bei erhöhter Temperatur und erhöhtem Druck - verpreßt. Vorzugsweise werden dabei Temperaturen von 80 bis 250°C, besonders bevorzugt 100 bis 220°C, eingehalten. Der Anfangspreßdruck liegt auch hier vorzugsweise zwischen 5 und 150 bar; im Laufe des Preßvorganges fällt dann der Druck meist bis gegen 0 ab.

Erfindungsgemäß können die Polyisocyanat-Aktivator-Formulierungen auch in Kombination mit den oben beschriebenen Polyhydroxylverbindungen in einem NCO/OH-Verhältnis von 1,1 : 1 bis 10 : 1, vorzugsweise 1,5 : 1 bis 5 : 1, eingesetzt werden. Es ist dabei möglich, die beiden Komponenten getrennt oder als reaktives Gemisch einzusetzen. Praktische Bedeutung haben derartige Kombinationen von Polyisocyanat und Polyhydroxylverbindungen als Bindemittel z. B. bei der Bindung von Korkschrot. Es ist auch möglich, an sich bekannte Treibmittel in einer Menge von ca. 0,5 bis 30 Gew.-%, bezogen auf Binde- oder Imprägniermittel

und/oder andere die Schaumbildung oder die chemische Reaktion zwischen Polyisocyanaten, lignocellulosehaltigem Material und gegebenenfalls Polyhydroxylverbindungen beeinflussende Additive wie Stabilisatoren, in einer Menge von 0,05 bis 10 Gew.-%, bezogen auf Bindemittel- bzw. Imprägniermittel, zuzusetzen. Die erfindungsgemäß als Bindemittel zu verwendenden Polyisocyanat-Aktivator-Formulierungen können auch mit den in der Holzwerkstoffindustrie bisher überwiegend eingesetzten wäßrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z. B. Sulfitablauge (Lignin-Sulfonat oder anderen technischen Ligninlösungen des Holzaufschlusses) oder gerbstoffartigen Verbindungen wie Tannin, wo z. B. ein Mischungsverhältnis der erfindungsgemäßen mit diesen zusätzlichen Bindemitteln zwischen 1 : 10 und 10 : 1, vorzugsweise zwischen 1 : 5 und 5 : 1, eingehalten werden kann und wobei man die erfindungsgemäßen Bindemittel und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z. B. die äußeren Schichten mit konventionellen Klebstoffen (allein oder gemeinsam mit dem Polyisocyanat-Bindemittel und eine oder mehrere innere Schichten mit den erfindungsgemäß zu verwendenden Polyisocyanat-Bindemittel (allein oder gemeinsam mit konventionellen Klebstoffen) versetzen und anschließend miteinander verpressen.

Bei der Herstellung von Spanplatten, besonders mehrschichtiger Spanplatten, ergibt sich oft das Problem, die Späne auch in den Mittelschichten der Spanplatten bei möglichst kurzen Preßzeiten noch vollständig mit den Polyisocyanat-Bindemitteln umzusetzen. Hier wirkt sich der Vorteil der erfindungsgemäßen, latent wirksamen wärmeaktivierbaren Katalysatoren besonders günstig aus, indem gerade in den Mittelschichten der Katalysator eingesetzt wird und hier somit eine beschleunigte Abbindung erfolgt, obwohl die Erwärmung der Mittelschicht zwangsläufig relativ verzögert von der Außenseite her erfolgt. Die hohe Temperatur, die vom Preßwerkzeug einwirkt, heizt zunächst die Deckschichten stark auf und bewirkt einen Dampfstoß, der die Temperatur (knapp über 100°C) ins Innere der Spanplatten überträgt. Bereits bei dieser Temperatur reagieren dann die katalysatorhaltigen Polyisocyanat-Bindemittel in der Mittelschicht in deutlich verkürzter Zeit ab. Eine weitere, wesentliche Verkürzung dieser Zeit ist kaum mehr realisierbar, da die Wärmeübertragung in die Mittelschicht nicht mehr schneller erfolgen kann. Es ist demgemäß bevorzugt, nur die Mittelschicht erfindungsgemäß zu aktivieren und die Deckschichten ohne Katalysator zu formulieren.

Man kann aber auch die Deckschicht-Beleimung der Späne mit aktivatorhaltigen Polyisocyanaten vornehmen, doch bringt dies keine wesentliche Änderung, da der für den Erfolg wesentliche Effekt die ausreichende Bindung in der Mittelschicht ist. In der Praxis verfolgt man die ausreichende Bindung der Späne in den Schichten durch Messung der Dicke bzw. Dickenzunahme der gebildeten Platten nach Verlassen der Presse.

Infolge ihrer hervorragenden mechanischen Eigenschaften eignen sich die erfindungsgemäß hergestellten Platten oder Formteile auf Basis von lignocellulosehaltigen oder anderen organischen und/oder anorganischen Rohstoffen vor allem für eine Verwendung im Bauwesen. Um den Platten oder Formteilen die hierfür im allgemeinen erforderliche Beständigkeit gegen Pilzbefall, Insektenfraß oder Feuereinwirkung zu verleihen, kann man den Bindemitteln oder den Rohstoffen die handelsüblichen Additive, z. B. wäßrige Polyethylenemulsionen organische oder anorganische Schutzmittel, in reiner Form oder als Lösung in einer Menge von ca. 0,05 bis 30 Gew.-%, vorzugsweise 0,5 bis 20 Gew.-%, bezogen auf gesamtes Material, zusetzen. Als Lösungsmittel kommen in Frage: Wasser oder organische Lösungsmittel, z. B. Rückstandsöle aus der Erdölaufarbeitung, Chlorkohlenwasserstoffe u.a. Die Verleimungsqualität wird hierdurch im allgemeinen nicht beeinträchtigt. Im Gegensatz zu Phenol/ Formaldehyd-Harz-verleimten Platten treten bei den erfindungsgemäß hergestellten Werkstoffen dabei vorteilhafterweise weder Salzausblühungen noch "Ausbluten" ein.

Bedingt durch die hohe Klebkraft der erfindungsgemäßen Bindemittel neigen die hiermit imprägnierten bzw. gebundenen Formkörper häufig dazu, an den Oberflächen der heißen Pressen oder Formen zu haften. Dies kann durch Trennmittel, welche man dem Bindemittel zusetzt, vermieden werden. Eine andere Lösung besteht darin, die Trennmittel in reiner Form oder als Lösung auf die mit den Preßlingen in Berührung kommenden metallischen Oberflächen oder die Formlingsoberfläche aufzubringen. Als äußere Trennmittel kommen hierbei alle bisher zu diesem Zweck vorgeschlagenen Substanzen in Frage. Bevorzugt sind jedoch gemäß DE-OS 2 325 926 Verbindungen, welche bei Isocyanaten eine Isocyanuratbildung katalysieren, beispielsweise Phenol-Mannichbasen, Derivate des Hexahydrotriazins oder Alkalisalze von Carbonsäuren und/oder Seifen, gegebenenfalls in Lösung wie z. B. wäßrigem Diethylenglykol. Ein weiterer Lösungsweg, die Haftung auszuschalten, besteht darin, eine Trennschicht zwischen Preßling und metallischer Pressenoberfläche anzuordnen, wobei die Trennschicht aus Bahnen, Folien oder Zerkleinerungsmaterial verschiedener Rohstoffe (z. B. Kunststoffe, Papier, Holz, Metall) bestehen kann. Wie schon mehrfach erwähnt, können mit den erfindungsgemäß zu verwendenden Isocyanat-Bindemittel im Vergleich zu herkömmlichen Bindemitteln auf Basis von Phenol/Formaldehyd- oder Harnstoff/Formaldehyd-Harzen bei der Spanplattenherstellung wesentliche Verbesserungen, sowohl im Hinblick auf die mechanischen Eigenschaften als auch in verfahrenstechnischer Hinsicht, erzielt werden. So ist es im Falle von Holzspanplatten möglich, entweder bei gleicher Bindemittelmenge wie bei Phenol/Formaldehyd bzw. Harnstoff/Formaldehyd-Harzen eine um bis zu 50 % erhöhte Biegesteifigkeit (neben einer Verbesserung anderer mechanischer Eigenschaften) oder aber bei einer um etwa 25 bis 70 % erniedrigten Bindemittelkonzentration ein gleiches mechanisches Eigenschaftsbild zu erreichen. Diese optimalen Werkstoffeigenschaften werden insbesondere dann erzielt, wenn als Bindemittel

ein Polymethylen-polyphenyl-polyisocyanat mit der oben näher definierten Viskosität und Isomerenverteilung eingesetzt wird.

Die folgenden Beispiele erläutern die Erfindung. Wenn nicht anders vermerkt, sind Zahlenangaben als Gewichtsteile bzw. Gewichtsprozente zu verstehen.

Die in den nachfolgenden Beispielen eingesetzten, erfindungsgemäß zu verwendenden Ammoniumsalze wurden wie folgt hergestellt:

**Ammoniumsalz I**

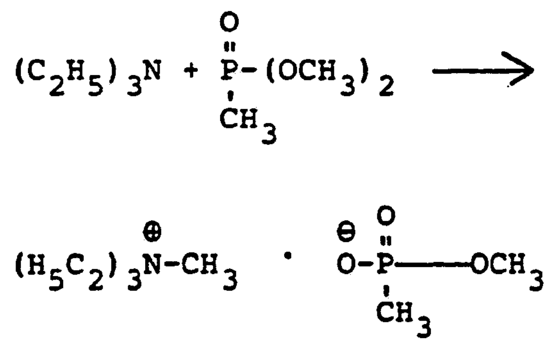

101 Gew.-Teile Triethylamin und 248 Gew.-Teile Methanphosphonsäuredimethylester werden vermischt und unter Rühren 8 Stunden leicht am Rückfluß gekocht. Anschließend wird überschüssiger Methanphosphonsäureester im Vakuum abdestilliert.

Man erhält 140 Gew.-Teile einer gelben viskosen Flüssigkeit.

**Ammoniumsalz II**

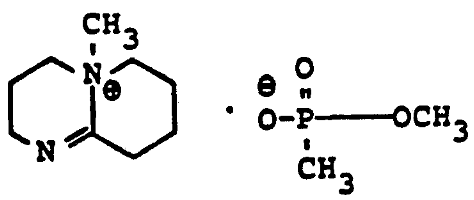

124 Teile Methanphosphonsäuredimethylester und 77,5 Teile 1,8-Diazabicyclo(5.4.0)undec-7-en werden 5 Stunden bei 100°C gerührt. Anschließend wird überschüssiger Phosphorsäureester im Vakuum abdestilliert.

Man erhält 140 Teile einer gelben, mittelbiskosen Flüssigkeit.

**Ammoniumsalz IV**

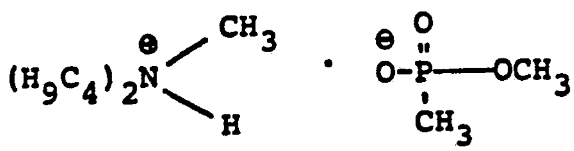

258 Gew.-Teile Dibutylamin und 248 Gew.-Teile Methanphosphonsäuredimethylester werden vermischt und unter Rühren auf 135 bis 150°C hochgeheizt. Nun wird mit einem Eisbad so gekühlt, daß durch die exotherme Reaktion die Temperatur auf 140-150°C gehalten wird. Anschließend rührt man 150°C noch 5 Stunden nach. Das erhaltene Produkt wird durch Destillation im Vakuum von unumgesetzten Ausgangsprodukten befreit.

Man erhält 350 Gew.-Teile einer farblosen, viskosen Flüssigkeit, die bei Raumtemperatur langsam auskristallisiert.

**Ammoniumsalz V**

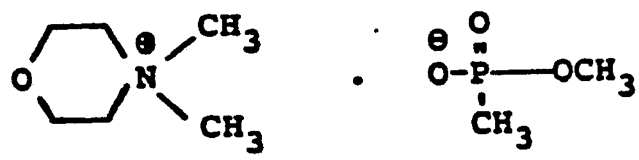

Die Herstellung erfolgte in Analogie zur Herstellung von Ammoniumsalz I jedoch unter Verwendung einer äquivalenten Menge an N-Methyl-morpholin anstelle des Triethylamins.

**Ammoniumsalz VI**

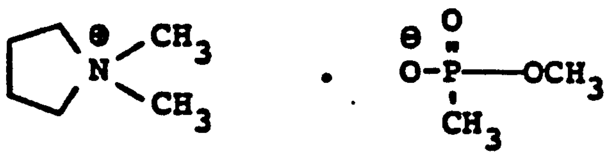

Die Herstellung erfolgte in Analogie zur Herstellung von Ammoniumsalz I jedoch unter Verwendung einer äquivalenten Menge an N-Methyl-pyrrolidin anstelle des Triethylamins.

**Ammoniumsalz VII**

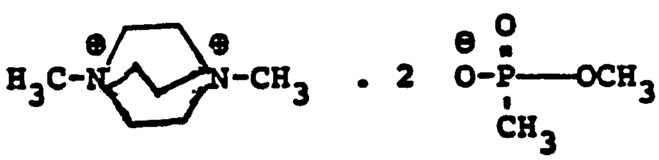

123 Gew.-Teile Triethylendiamin (Dabco(R)) und 1240 Gew.-Teile Methanphosphonsäuredimethylester werden unter leichter Stickstoff-Durchleitung 8 Stunden bie 100°C gerührt. Anschließend werden im Vakuum ca. 400 Gew.-Teile überschüssigen Methanphosphonsäureesters abdestilliert, das ausgefallene Produkt abfiltriert und im Vakuum getrocknet.

Man erhält 335 Gew.-Teile einer farblosen, kristallinen Verbindung.

**Ammoniumsalz VIII**

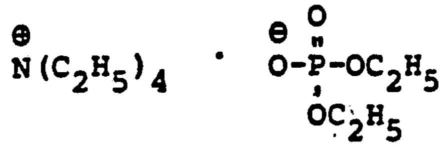

202 Gew.-Teile Triethylamin und 1820 Gew.-Teile Triethylphosphat werden unter leichter Stickstoff-Durchleitung 8 Stunden unter Rühren leicht am Rückfluß gekocht. Anschließend werden die nicht umgesetzten Ausgangsverbindungen im Vakuum abdestilliert. Man erhält 110 Gew.-Teile einer farblosen, mittelviskosen Flüssigkeit, die sehr langsam erstarrt.

**Ammoniumsalz IX**

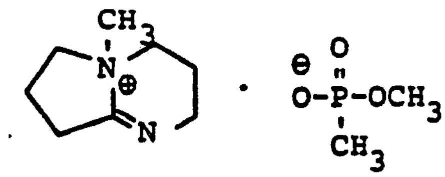

220 Gew.-Teile 1,5-Diazabicyclo[3.4.0]nonen-5 und 446 Gew.-Teile Methanphosphonsäuredimethylester werden unter leichter Stickstoff-Durchleitung 5 Stunden bei 110°C gerührt. Nicht umgesetzte Ausgangssubstanzen werden dann im Vakuum abdestilliert. Man erhält 410 Gew.-Teile einer bernsteinfarbenen, viskosen Flüssigkeit.

**Ammoniumsalz X**

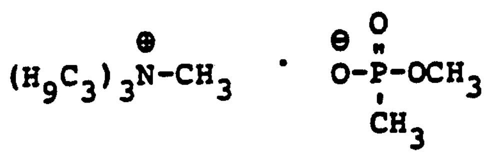

37 Gew.-Teile Tri-n-butylamin und 124 Gew.-Teile Methanphosphonsäuredimethylester werden unter leichter Stickstoff-Durchleitung 8 Stunden bei 180°C gerührt. Der überschüssige Phosphorester wird anschließend im Vakuum abdestilliert. Man erhält 62 g einer farblosen, mittelviskosen Flüssigkeit.

Die Strukturen der obengenannten Ammoniumverbindungen wurden NMR-spektroskopisch bestätigt.

Besonders bevorzugt verwendet werden Umsetzungsprodukte von Methanphosphonsäuredialkylestern mit Di- oder Trialkylaminen.

**Beispiel 1**

2250 Gew.-Teile Späne, die aus einem Gemisch aus Nadelholz und Laubholz bestehen und einen Feuchtigkeitsgehalt von 10 % aufweisen, werden mit 130 Teilen Polyisocyanat (Bayer PU-1520 A; Polyisocyanatgemisch auf Basis von Polymethylen-polyphenyl-polyisocyanaten) mit einem NCO-Gehalt von 30 % und einer Viskosität von 200 mPa.s/25°C, welches 0,5, 1 bzw. 2 % der Katalysatoren I, II bzw. IV enthält, versetzt. Die Zugabe der Katalysatoren in das Polyisocyanat erfolgte in Form einer 50 %-igen Lösung der Katalysatoren in Diethylenglykol-mono-n-butylether. Diese beleimten, aktivatorhaltigen Späne, welche bei Raumtemperatur mindestens 1 bis 2 Stunden lagerfähig sind, werden für die Mittelschicht einer Spanplatte verwendet.

Aus mit (aktivatorfreiem Polyisocyanat (Bayer PU-1520A)) beleimten Deckschichten (980 Teile Holzspäne mit einem Feuchtigkeitsgehalt von 15 % und 55 Teile des genannten Polyisocyanats) und den mit Polyisocyanat/Aktivator beleimten Spänen für die Mittelschicht werden auf einem Stahlblech, das vorher mit einer wäßrigen Kaliumacetat/Diethylenglykollösung als äußerem Trennmittel behandelt wurde, 3-schichtige Formlinge gebildet, die Oberfläche der Formlinge ebenfalls mit Trennmittellösung benetzt und bei 170°C Heizplattentemperatur verpreßt. Die V 100-Querzugs-festigkeit der erhaltenen Spanplatten (Dicke 16 mm) wird gemäß DIN 68 763 nach verschiedenen Preßzeiten bei 170°C bestimmt (vgl. Tabelle 1).

**Tabelle 1**

V 100-Querzugsfestigkeiten an Spanplatten

| Katalysator in der Mittelschicht (% bezogen auf Polyisocyanat) | Preßzeit bei 170° C 3,2 min | 1,6 min |
|---|---|---|
| ohne Katalysator (Vergleich) | 0,28 MPa | 0,20 MPa |
| 0,5 % Katalysator I | 0,28 MPa | 0,25 MPa |
| 1,0 % Katalysator II | 0,28 MPa | 0,25 MPa |
| 2,0 % Katalysator IV | 0,30 MPa | 0,26 MPa |

Ergebnis: Durch den Zusatz an erfindungsgemäßen Katalysatoren läßt sich die Preßzeit verkürzen.

**Beispiel 2**

Zur Latenz und Wärmeaktivierbarkeit der erfindungsgemäßen Katalysatoren

In eine Mischung von Toluylendiisocyanat (80/20-Isomerengemisch aus 2,4- und 2,6-Toluylendiisocyanat) mit einem Gehalt von 7,5 Gew.-% Holzspänen (Feuchtigkeitsgehalt der Späne 8 %) werden die in der Tabelle 2 aufgeführten Katalysatoren I, II, IV, V, VIII, IX und X in den angegebenen Mengen gelöst. Feste Katalysatoren wurden dabei als 80 %-ige Lösungen in Methanphosphonsäuredimethylester zum Diisocyanat gegeben. Die Zeit bis zur Verfestigung der Mischung wurde bei unterschiedlichen Temperaturen gemessen.

Wie die in der Tabelle 2 aufgeführten Ergebnisse zeigen, besitzen die erfindungsgemäßen Katalysatoren - abhängig von ihrer Konzentration - bei Raumtemperatur eine Topfzeit bis 50 Stunden, während sie bei Zufuhr von Wärme (100° C) innerhalb sehr kurzer Zeit zur Verfestigung der Isocyanatmischung führen, d.h. die latent wirksamen Katalysatoren wirken wärmeaktiviert. Demgegenüber zeigen hochwirksame Katalysatoren, besonders für die Trimerisierung von Diisocyanaten, sowohl bei Raumtemperatur als auch bei 100° C eine praktisch sofort oder in sehr kurzer Zeit einsetzende Verfestigung. Weniger wirksame Katalysatoren des Standes der Technik zeigen zwar bei Raumtemperatur ebenfalls langsame Verfestigungen, doch kann die Verfestigungszeit durch Erwärmen auf 100° C dann auch nicht auf sehr kurze Zeit herabgesetzt werden, wie dies bei den erfindungsgemäßen, wärmeaktivierbaren Katalysatoren der Fall ist.

**Tabelle 2**

| Katalysator >k | in T-80 (7,5 % Holzspäne enthaltend) | Beginn der Verfestigung | | |
|---|---|---|---|---|
| | | bei °C | nach | Min |
| Ammoniumsalz No. | Menge in % | 20° C | 100° C | |
| VIII | 0,5 | 1 h | sofort | |
| | 0,25 | 1 h 30′ | sofort | |
| | 0,1 | mind.20 h* | 3′ | |
| IV | 2 | 20′ | sofort | |
| | 0,5 | 7 h | 1′ | |
| | 0,25 | mind.10 h* | 1-2′ | |
| | 0,1 | mind.50 h* | 15′ | |
| I | 0,5 | 2′ | sofort | |
| | 0,25 | 3′ | sofort | |
| | 0,1 | 10-15′ | sofort | |
| V | 0,5 | 15′ | sofort | |
| | 0,25 | 20′ | sofort | |
| | 0,1 | 35′ | sofort | |
| IX | 0,5 | 1-3′ | sofort | |
| | 0,25 | 2-5′ | sofort | |
| | 0,1 | 5 h | 2,5-5′ | |
| II | 0,5 | 1′ | sofort | |
| | 0,25 | 1′ | sofort | |
| | 0,1 | 42-52′ | sofort | |
| X | 0,5 | 4′ | sofort | |
| | 0,25 | 10′ | sofort | |
| | 0,1 | 45-55′ | sofort | |

*) wurde nach der angegebenen Zeit abgebrochen.

**Beispiel 3**

Dickenänderung von 16 mm - Labor-Spanplatten in Abhängigkeit von der Preßzeit bei einer Preßtemperatur von 200° C

Sowohl in der Industrie als auch im Labor gibt die Dickenänderung der Spanplatten, gemessen nach der Verpressung einen Hinweis auf die kürzestmögliche Preßzeit. Steigt die Plattendicke nach Verpressung über die zugrundegelegte Solldicke an, so sinken die Plattenrohdichte und die Plattenfestigkeiten deutlich ab.

Aus wirtschaftlichen Überlegungen ist jedoch eine mögliche Verkürzung der Preßzeit überaus interessant. Diese Möglichkeit ist bei Einsatz der erfindungsgemäßen Katalysatoren im Polyisocyanat-Bindemittel gegeüber nicht katalysierten Polyisocyanat-Bindemittel deutlich gegeben (siehe Tabelle 3). Wie die Ergebnisse in Tabelle 3 zeigen, ist die minimale Preßzeit, d.h. die kürzestmögliche Preßzeit bei Anwendung der erfindungsgemäßen Katalysatoren auf etwa 75 % der minimalen Preßzeit bei unkatalysiertem Polyisocyanat-Bindemittel verkürzt, wobei die Verwendung der latentwirksamen erfindungsgemäßen Katalysatoren die Verarbeitungszeit der Polyisocyanat-beleimten Späne vor der Verpressung nicht vermindert.

**Tabelle 3**

| Preßzeit bei 200° C (in sec/mm-Endstärke der Spanplatte) | Plattendicke nach Verpressung ohne Katalysator | 1 % Katalysator |
|---|---|---|
| 12 | 15,9 mm | 15,9 mm |
| 10 | 15,9 mm | 15,9 mm |
| 9 | 15,9 mm | 15,9 mm |
| 8* | 15,95 mm* | 15,9 mm |
| 7 | 16,1 mm | 15,95 mm |
| 6* | 16,4 mm | 16,0 mm* |
| 5,5 | unzureichend verfestigt | 16,4 mm |

*) = minimale Preßzeit

**Beispiel 4**

Analog Beispiel 1 werden Mittelschichtspäne mit einer Polyisocyanat-Wasser-Emulsion, die wie folgt hergestellt wird, besprüht:

110 Teile Wasser werden mit 40 Teilen einer 50 %-igen Paraffindispersion verrührt, in welche 130 Teile einer Polyisocyanat auf MDI-Basis (Bayer PU 1520 A), welche 1 bzw. 2 Gew.-% einer 50 %-igen Lösung der Katalysatoren I bzw. II in Diethylenglykol-mono-n-butylether enthalten, mittels hochtourigem Rührer innerhalb von 30 Sekunden emulgiert. Die weitere Verarbeitung erfolgt wie in Beispiel 1 angegeben. Ergebnisse siehe Tabelle 4.

**Tabelle 4**

V 100-Querzugfestigkeiten (MPa)

| Katalysator-Lösung in der Mittelschicht (Gew.-% bezogen auf Polyisocyanat) | Preßzeit bei 170° C 3,2 min | 1,6 min |
|---|---|---|
| ohne Katalysator (Vergleich) | 0,28 MPa | 0,21 MPa |
| 0,5 % Katalysator I | 0,28 MPa | 0,26 MPa |
| 1,0 % Katalysator II | 0,31 MPa | 0,25 MPa |

**Patentansprüche**

1. Verfahren zur Herstellung von Preßwerkstoffen, insbesondere Holzspanplatten, durch Heißverpressen von mit Polyisocyanaten als Bindemittel vermischten und/oder imprägnierten lignocellulosehaltigen Werkstoffen unter Verwendung von Katalysatoren, dadurch gekennzeichnet, daß als Katalysatoren tetiäre oder quartäre Ammoniumphosphonate oder quartäre Ammoniumphosphate eingesetzt werden.

2. Verfahren nach Anspruch 1, dadurch gekennzeichnet, daß die Katalysatoren aus Alkylestern der phosphorigen Säure oder der Phosphonsäure und sekundären oder tertiären Aminen bzw. aus Alkylestern der Phosphorsäure und tertiären Aminen hergestellt wurden.

3. Verfahren nach Anspruch 2, dadurch gekennzeichnet, daß als Alkylester der phosphorigen Säure Triethylphosphit, Trimethylphosphit oder Trioctylphosphit und als Alkylester der Phosphorsäure Triethylphosphat oder Trimethylphosphat eingesetzt worden sind.

4. Verfahren nach Anspruch 2, dadurch gekennzeichnet, daß als Phosphonsäurealkylester solche der allgemeinen Formel

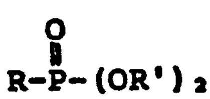

eingesetzt werden, in der

R für einen, gegebenenfalls inerte Substituenten aufweisenden, aromatischen Kohlenwasserstoffrest, insbesondere Phenylrest, oder einen aliphatischen oder cycloaliphatischen Kohlenwasserstoffrest, insbesondere einen Alkylrest mit 1 bis 8 Kohlenatomen, steht und

R' für gleiche oder verschiedene Alkylreste mit 1 bis 8, besonders bevorzugt 1 bis 4 Kohlenstoffatomen, stehen.

5. Verfahren nach Anspruch 2 und 4, dadurch gekennzeichnet, daß als Phosphonsäurealkylester Benzolphosphonsäure-dimethylester, p-Toluolphosphonsäurediethylester, Methylphosphonsäuredimethylester, n-Butanphosphonsäurediethylester, Ethanphosphonsäurediethylester oder Ethanphosphonsäuredimethylester eingesetzt worden sind.

6. Verfahren nach Anspruch 1, dadurch gekennzeicnnet, daß als Katalysatoren Verbindungen der folgenden Formeln eingesetzt werden:

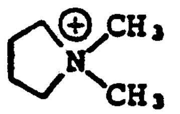 · $X^{\ominus}$

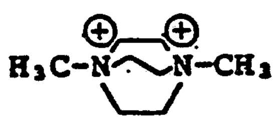 · $2X^{\ominus}$

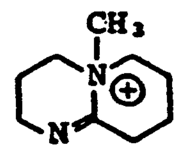 · $X^{\ominus}$

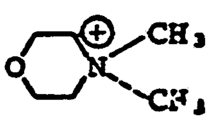 · $X^{\ominus}$

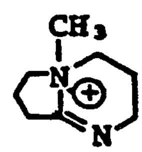 · $X^{\ominus}$

$(C_4H_9)_3\overset{\oplus}{N}-CH_3$ · $X^{\ominus}$

$[HO-(CH_2)_2-]_3\overset{\oplus}{N}-CH_3$ · $X^{\ominus}$

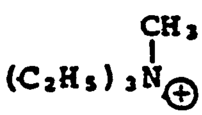 · $X^{\ominus}$

wobei

$X^{\ominus}$ für 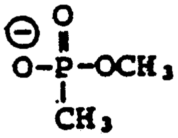

und

$Y^{\ominus}$ für 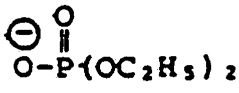

steht.

7. Verfahren nach Anspruch 1 bis 6, dadurch gekennzeichnet, daß weitere, aus der Polyurethan-Chemie bekannte Katalysatoren mitverwendet werden.

8. Verfahren nach Ansprüchen 1 bis 7, dadurch gekennzeichnet, daß das Polyisocyanat in Kombination mit Polyolen in einem NCO/OH-Verhältnis von 1,1 : 1 bis 10 : 1 eingesetzt wird.

9. Verfahren nach Ansprüchen 1 bis 8, dadurch gekennzeichnet, daß der Katalysator formuliert im Polyisocyanat und/oder den Polyolen eingesetzt und bei mehrschichtigen Preßwerkstoffen nur die Mittelschicht mit den erfindungsgemäßen Katalysatoren aktiviert wird.

10. Verfahren nach Ansprüchen 1 bis 9, dadurch gekennzeichnet, daß man neben Polyisocyanat-Bindemitteln andere, bekannte Bindemittel auf Basis Harnstoff/Formaldehyd- und/oder Melamin/Formaldehyd- und/oder Phenol/Formaldehyd-Harzen mitverwendet und weitere Hilfs- und Zusatzmittel. Trennmittel, Holzschutzmittel, Flammschutzmittel oder Polyethylendispersionen zugesetzt werden.

**Claims**

1. Process for the production of moulded materials, in particular wood chip board, by hot press moulding lignocellulose-containing materials mixed and/or impregnated with polyisocyanates as binders, using catalyst, characterised in that the catalysts used are tertiary or quaternary ammonium phosphonates orquaternary ammonium phosphates.

2. Process according to claim 1, characterised in that the catalysts have been prepared from alkyl esters of phosphorous acid or of phosphonic acid and secondary or tertiary amines or from alkyl esters of phosphoric acid and tertiary amines.

3. Process according to claim 2, characterised in that the alkyl esters of phosphorous acid used were triethylphosphite, trimethylphosphite or trioctylphosphite and the alkyl esters of phosphoric acid were triethylphosphate or trimethylphosphate.

4. Process according to ciaim 2, characterised in that the phosphonic acid alkyl esters used correspond to the following general formula

$$R-\overset{\overset{\displaystyle O}{\|}}{P}-(OR')_2$$

wherein

R denotes an aromatic hydrocarbon group optionally containing inert substituents, in particular the phenyl group, or an aliphatic or cycloaliphatic hydrocarbon group, in particular an alkyl group having 1 to 8 carbon atoms, and

R′ denotes identical or different alkyl groups having 1 to 8, most preferably 1 to 4 carbon atoms.

5. Process according to claims 2 and 4, characterised in that the phosphonic acid alkyl esters used were benzene phosphonic acid dimethylester, p-toluenephosphonic acid diethylester, methyl phosphonic acid dimethylester, n-butane phosphonic acid diethylester, ethane phosphonic acid diethylester or ethanephosphonic acid dimethylester.

6. Process according to claim 1, characterised in that compounds corresponding to the following formulae are used as catalysts:

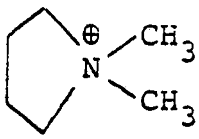 . $X^{\ominus}$

$\overset{\oplus}{N}(C_2H_5)_4 \cdot Y^{\ominus}$

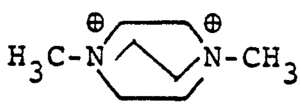 . $2X^{\ominus}$

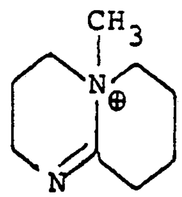 . $X^{\ominus}$

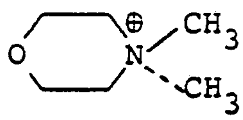 . $X^{\ominus}$

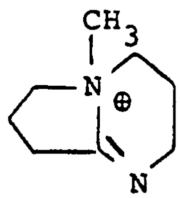 . $X^{\ominus}$

$(C_4H_9)_3\overset{\oplus}{N}-CH_3 \cdot X^{\ominus}$

$[HO-(CH_2)_2-]_3\overset{\oplus}{N}-CH_3 \cdot X^{\ominus}$

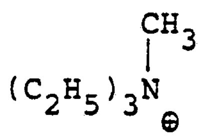 . $X^{\ominus}$

wherein

$X^{\ominus}$ stands for 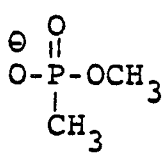

and

$Y^{\ominus}$ stands for 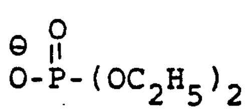 .

7. Process according to claims 1 to 8, characterised in that other catalysts known from polyurethane chemistry are used in addition.

8. Process according to claims 1 to 7, characterised in that the polyisocyanate is used in combination with polyols at an NCO/OH ratio of from 1.1 : 1 to 10 : 1.

9. Process according to claims 1 to 8, characterised in that the catalyst is used as a formulation in the polyisocyanate and/or the polyols and in the case of multilayered moulded materials only the middle layer is activated with the catalysts according to the invention.

10. Process according to claims 1 to 9, characterised in that in addition to polyisocyanate binders, other, known binders based on urea/formaldehyde and/or melamine/ formaldehyde and/or phenol/formaldehyde resins are used and other auxiliary agents and additives, mould parting agents, wood protective agents, flame protective agents or polyethylene dispersions are also added.

**Revendications**

Procédé pour la fabrication de matériaux moulés par compression, en particulier de panneaux de copeaux de bois, par compression à chaud de matériaux lignocellulosiques mélangés avec des polyisocyanates servant de liants et/ou imprégnés par de tels polyisocyanates, avec utilisation de catalyseurs, caractérisé en ce que l'on utilise en tant que catalyseurs des phosphonates d'ammonium tertiaires ou quaternaires ou des phosphates d'ammonium quaternaires.

2. Procédé selon la revendication 1, caractérisé en ce que les catalyseurs ont été préparés à partir d'esters alkyliques de l'acide phosphoreux ou de l'acide phosphonique et d'amines secondaires ou tertiaires ou à partir d'esters alkyliques de l'acide phosphorique et d'amines tertiaires.

3. Procédé selon la revendication 2, caracterisé en ce que l'on utilise en tant qu'esters alkyliques de l'acide phosphoreux du phosphite de triéthyle, du phosphite de triméthyle ou du phosphite de trioctyle et en tant qu'esters alkyliques de l'acide phosphorique, du phosphate de triéthyle ou du phosphate de triméthyle.

4. Procédé selon la revendication 2, caractérisé en ce que l'on utilise en tant qu'esters alkyliques de l'acide phosphonique les esters répondant à la formule générale

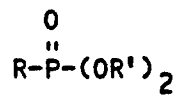

dans laquelle

R représente un radical hydrocarboné aromatique portant éventuellement des substituants inertes, en particulier un radical phényle, ou un radical hydrocarboné aliphatique ou cycloalphatique, en particulier un radical alkyle en $C_1$-$C_8$ et

les symboles R', ayant des significations identiques ou différentes, représentent des groupes alkyle en $C_1$-$C_8$, de préférence en $C_1$-$C_4$.

5. Procédé selon les revendications 2 et 4, caractérisé en ce que l'on utilise en tant que phosphonates d'alkyle du benzène-phosphonate de diméthyle, du p-toluène-phosphonate de diéthyle, du méthyl-phosphonate de diméthyle, du n-butane-phosphonate de diéthyle, de l'éthane-phosphonate de diéthyle ou de l'éthane-phosphonate de diméthyle.

6. Procédé selon la revendication 1, caractérisé en ce que l'on utilise en tant que catalyseurs les composés répondant aux formules suivantes.

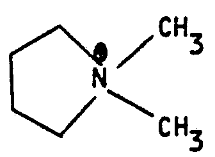 $\cdot\ X^{\ominus}$ $\overset{\oplus}{N}(C_2H_5)_4 \cdot Y^{\ominus}$

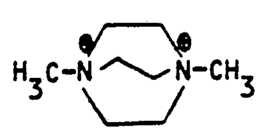 $\cdot\ 2X^{\ominus}$ 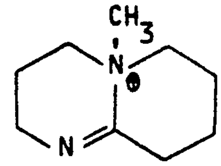 $\cdot\ X^{\ominus}$

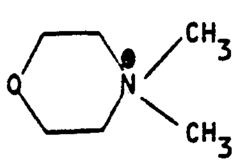 $\cdot\ X^{\ominus}$ 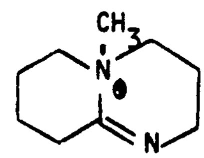 $\cdot\ X^{\ominus}$

$(C_4H_9)_3\overset{\oplus}{N}-CH_3 \cdot X^{\ominus}$ $[HO-(CH_2)_2-]_3\overset{\oplus}{N}-CH_3 \cdot X^{\ominus}$

$$(C_2H_5)_3\overset{\displaystyle CH_3}{\underset{\oplus}{N}} \quad \cdot \quad X^{\ominus}$$

dans lesquelles

$$X^{\ominus} = \overset{\ominus}{O}-\overset{\displaystyle O}{\overset{\|}{\underset{\displaystyle CH_3}{\underset{|}{P}}}}-OCH_3$$

et

$$Y^{\ominus} = \overset{\ominus}{O}-\overset{\displaystyle O}{\overset{\|}{P}}(OC_2H_5)_2$$

7. Procédé selon les revendications 1 à 6, caractérisé en ce que l'on utilise conjointement d'autres catalyseurs connus dans la chimie des polyuréthannes.

8. Procédé selon les revendications 1 à 7, caractérisé en ce que l'on utilise le polyisocyanate en combinaison avec des polyols à un rapport NCO/OH de 1,1 : 1 à 10 : 1.

9. Procédé selon les revendications 1 à 8, caractérisé en ce que le catalyseur est introduit dans le polyisocyanate et/ou les polyols et en ce que, dans le cas de matériaux moulés par compression à plusieurs couches, on n'active que la couche médiane à l'aide des catalyseurs selon l'invention.

10. Procédé selon les revendications 1 à 9, caractérisé en ce que l'on utilise conjointement, en plus des liants du type polyisocyanate, d'autres liants connus à base de résines urée/formaldéhyde et/ou mélamine/formaldéhyde et/ou phénol/formaldéhyde et en ce que l'on ajoute d'autres produits auxiliaires et additifs, des agents de démoulage, des agents de protection des bois, des agents ignifugeants ou des dispersions de polyéthylène.